# EUROPÄISCHE PATENTANMELDUNG

(11) **EP 3 643 550 A1**
(43) Veröffentlichungstag der Anmeldung: **29.04.2020**
(21) Anmeldenummer: 19204099.6
(22) Anmeldetag: 18.10.2019
(51) Int. Cl.: B60K 7/00, B60K 17/356, B60K 1/00

(54) **ELEKTROHYDRAULISCHES SYSTEMFAHRZEUG**

(30) Priorität: 22.10.2018 DE 102018126164
(71) Anmelder: Max Holder GmbH, 72768 Reutlingen (DE)
(72) Erfinder: Mayer, Christian, 72768 Reutlingen (DE); Reusch, Sebastian, 72141 Walddorfhäslach (DE); Götz, Patrick, 89155 Erbach-Ringingen (DE)
(74) Vertreter: Kohler Schmid Möbus Patentanwälte

(57) **Zusammenfassung**

Ein elektrohydraulisches Systemfahrzeug (10) weist zumindest einen ersten Elektromotor (24), der an eine Akkumulatoranordnung (12) angeschlossen ist, die eine Gleichspannung <60V, insbesondere von 48V, bereitstellt, und zumindest eine Fahrantriebs-Hydraulikpumpe (28) antreibt, die wiederum zumindest einen Fahrantriebs-Hydraulikmotor antreibt, auf.

## Beschreibung

Die Erfindung betrifft ein elektrohydraulisches Systemfahrzeug.

Systemfahrzeuge kommen beispielsweise in der Landwirtschaft oder im Kommunalbereich zum Einsatz. Ein Systemfahrzeug ist ein Fahrzeug, das nicht nur motorisch angetrieben ist, sondern auch noch Zusatzfunktionen erfüllen kann. Insbesondere können an Systemfahrzeuge unterschiedliche Anbauten angeschlossen und angetrieben werden. Beispielsweise kann ein Systemfahrzeug als Kehrmaschine ausgebildet sein. Jedoch auch andere Anbauten, wie beispielsweise ein Räumschild, um ein Systemfahrzeug als Schneepflug einzusetzen, sind denkbar. Dies bedeutet, dass nicht nur ein Antrieb zum Antreiben des Fahrzeugs notwendig ist, sondern dass auch noch weitere Antriebe notwendig sind, um die Anbauten anzutreiben.

Üblicherweise werden Systemfahrzeuge zum Fahrantrieb und zum Betrieb der Zusatzfunktionen durch einen Dieselmotor angetrieben. Jedoch auch bei Systemfahrzeugen besteht die Anforderung, diese zu elektrifizieren und dadurch Emissionen und Lärm zu reduzieren.

Aufgabe der vorliegenden Erfindung ist es daher, ein Systemfahrzeug bereitzustellen, welches ohne eine Brennkraftmaschine auskommt.

Gelöst wird diese Aufgabe erfindungsgemäß durch ein elektrohydraulisches Systemfahrzeug mit zumindest einem ersten Elektromotor, der an eine Akkumulatoranordnung angeschlossen ist, die eine Gleichspannung <60V, insbesondere von 48V, bereitstellt und zumindest eine Fahrantriebs-Hydraulikpumpe antreibt, die wiederum zumindest einen Fahrantriebs-Hydraulikmotor antreibt, wobei ein zweiter Elektromotor, der an die Akkumulatoranordnung angeschlossen ist, vorgesehen ist und die zumindest eine Fahrantriebs-Hydraulikpumpe antreibt. Durch die Verwendung einer Akkumulatoranordnung, die eine Gleichspannung von <60V bereitstellt, ist es möglich, das Fahrzeug ohne besondere Hochvoltzulassung zu warten und daran zu arbeiten. Dadurch wird eine Servicefreundlichkeit erreicht. Durch die Kombination eines Elektromotors mit einer Hydraulikpumpe und einem Hydraulikmotor, ist es möglich, die Vorteile eines Hydraulikantriebs bisheriger Systemfahrzeuge zu erhalten, aber trotzdem Emissionen zu reduzieren und insbesondere auch Lärm zu reduzieren.

Durch die Verwendung von zwei Elektromotoren zum Antrieb des elektrohydraulischen Systemfahrzeugs kann eine ausreichende Spitzenleistung erreicht werden, ohne dafür Elektromotoren verwenden zu müssen, die in einem deutlich höheren Voltbereich, beispielsweise bei 400V, betrieben werden müssen. Auch ist es möglich, durch die Kombination von zwei Elektromotoren, die bei einer niedrigeren Spannung als <60V betrieben werden, eine ausreichende Dauerleistung zur Verfügung zu stellen.

Vorteilhafterweise ist eine Fahrantriebssteuerung vorgesehen, die nach Bedarf den ersten und zweiten Elektromotor zu- und abschaltet. Dadurch kann die Effizienz des Fahrzeugs erhöht werden, da bei geringerer Energieanforderung ein Elektromotor abgeschaltet werden kann. Dadurch sind weniger Massen zu bewegen, als dies der Fall wäre, wenn nur ein großer Elektromotor verwendet werden würde. Besonders vorteilhaft ist es, dass für den Antrieb des elektrohydraulischen Systemfahrzeugs grundsätzlich bekannte und verfügbare Elektromotoren, die bei 48V betreibbar sind, eingesetzt werden können. Insbesondere können Elektromotoren, die als Lichtmaschinen für LKW's vorgesehen sind, verwendet werden.

Besonders vorteilhaft ist es, wenn durch den ersten und den zweiten Elektromotor eine Dauerleistung im Bereich von jeweils 5kW und eine Spitzenleistung im Bereich von 10kW erzeugbar ist. Somit kann das erfindungsgemäße Fahrzeug einen ausreichenden Leistungsbereich zur Verfügung stellen, um beispielsweise im kommunalen Bereich eingesetzt zu werden.

Die Einsatzzeiten eines erfindungsgemäßen Fahrzeugs können auf besonders einfache Art und Weise dadurch verlängert werden, dass die Akkumulatoranordnung als Wechselakkumulatoranordnung ausgebildet ist. Wenn demnach ein Akkumulator keine ausreichende Ladekapazität mehr aufweist, kann einfach der Akkumulator oder ein Akkumulatorpack ausgewechselt werden und das Fahrzeug mit einem voll geladenen Akkumulator bestückt werden. Somit wird durch das Aufladen der Akkumulatoranordnung die Einsatzzeit des Fahrzeugs nicht beschränkt oder verkürzt.

Gemäß einer Ausgestaltung der Erfindung kann vorgesehen sein, dass die Fahrantriebs-Hydraulikpumpe als Konstantpumpe ausgebildet ist. Insbesondere kann die Fahrantriebspumpe als Tandemkonstantpumpe ausgebildet sein. An die Tandemkonstantpumpe können jeweils ein Antriebsmotor für eine Vorder- und eine Hinterachse oder hydraulische Radmotoren für eine Vorder- und eine Hinterachse angeschlossen sein. Durch die Tandemkonstantpumpe kann auf diese Art und Weise der Gleichlauf von Vorder- zu Hinterachse und damit ein Mittendifferential realisiert werden.

Um die Elektrifizierung des Fahrzeugs zu vervollständigen, kann ein weiterer Elektromotor zum Antrieb einer weiteren Hydraulikpumpe vorgesehen sein. Durch die weitere Hydraulikpumpe können interne oder externe Komponenten des Fahrzeugs, die unabhängig vom Fahrantrieb sind, angetrieben werden.

Die weitere Hydraulikpumpe kann über den Elektromotor in unterschiedlichen Drehzahlbereichen betrieben werden. Dabei kann jeder Drehzahlbereich je nach Anforderung separat aktivierbar sein.

Die weitere Hydraulikpumpe kann über den weiteren Elektromotor bei unterschiedlichen Drehzahlen betrieben werden. Dieser Antrieb erfolgt unabhängig von einer Fahrfunktion. Anders als bei bisherigen Konzepten mit Verbrennungsmotor oder zentralem Elektromotor kann die Hydraulikpumpe, wenn weniger Leistung angefordert wird, mit geringer Drehzahl betrieben werden. Dadurch wird weniger Öl gepumpt. Verlustleistung wird reduziert. Es wird immer nur so viel Öl gepumpt, wie benötigt wird. Mehrere Kilowatt Verlustleistung können auf diese Weise vermieden werden.

Beispielsweise kann ein erster Bereich vorgesehen sein, um die Lenkung des Fahrzeugs anzutreiben. Ein zweiter Bereich kann vorgesehen sein, um interne Funktionen oder Komponenten anzutreiben, beispielsweise das lineare Heben und Senken von Steckkupplungen, an die weitere Komponenten, insbesondere externe Komponenten, angeschlossen werden können. Ein dritter Bereich kann dafür vorgesehen sein, eine externe Komponente, wie beispielsweise ein Besensystem einer Straßenkehrmaschine, anzutreiben.

Vorteilhafterweise kann daher die weitere Hydraulikpumpe mit einer Lenkeinheit und/oder zumindest einem Abtrieb verbunden sein.

Der Vorteil, einen separaten Elektromotor zum Antrieb der weiteren Hydraulikpumpe vorzusehen, besteht auch darin, dass das Fahrzeug dann unter Abschaltung oder weitestgehender Abschaltung des weiteren Elektromotors von einem Einsatzort zu einem anderen Einsatzort gefahren werden kann, ohne Energie für den weiteren Elektromotor aufwenden zu müssen.

Weitere Vorteile ergeben sich, wenn zumindest der erste und der zweite Elektromotor identisch aufgebaut sind. Insbesondere können alle drei zum Antrieb von Hydraulikpumpen vorgesehenen Elektromotoren identisch aufgebaut sein. Dadurch lassen sich die Herstellungskosten erheblich senken.

Die Anzahl separat zu montierender Komponenten lässt sich weiterhin dadurch reduzieren, wenn zumindest der erste Elektromotor einen Wechselrichter und einen Umrichter aufweist. Dies bedeutet, dass Wechselrichter und Umrichter in den ersten Elektromotoren integriert sind. Vorteilhafterweise sind diese Einheiten auch in den zweiten und den weiteren Elektromotor integriert.

Weitere Merkmale und Vorteile der Erfindung ergeben sich aus der nachfolgenden detaillierten Beschreibung eines Ausführungsbeispiels der Erfindung.

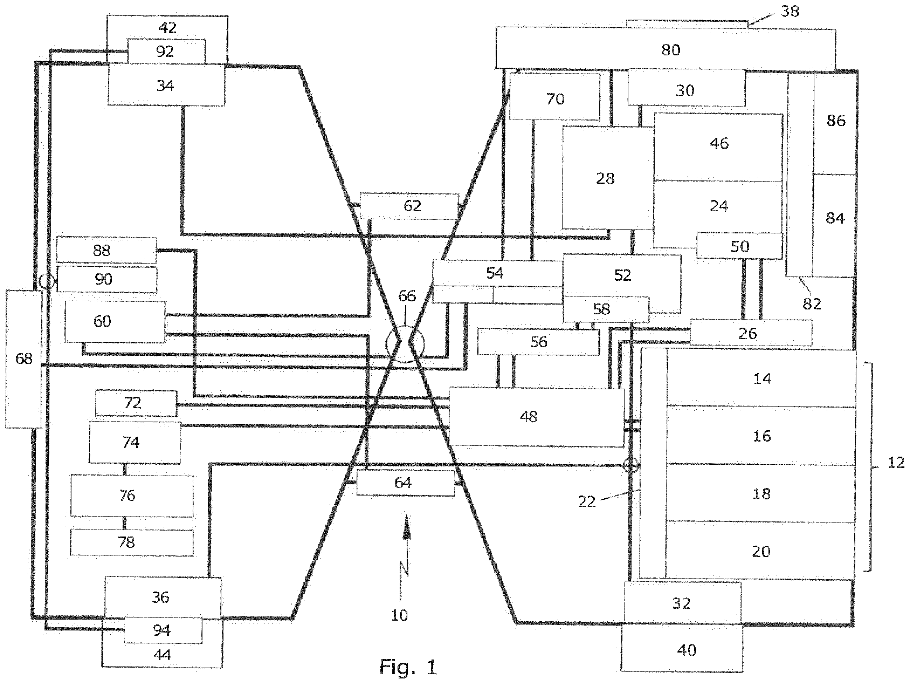

Die einzige Figur zeigt schematisch in Form eines Blockschaltbildes den Aufbau eines erfindungsgemäßen elektrohydraulischen Fahrzeugs.

Das elektrohydraulische Fahrzeug 10 umfasst eine Akkumulatoranordnung 12 mit einer Anzahl von Akkumulatoren 14, 16, 18, 20. Die Akkumulatoranordnung 12 ist mit einer als Batteriemanagementsystem ausgebildeten Steuerung 22 verbunden. Dabei ist die Akkumulatoranordnung 12 als Wechselakkumulatoranordnung ausgebildet. Dies bedeutet, dass die Akkumulatoranordnung 12 einfach gewechselt und extern aufgeladen werden kann. Eine geladene Akkumulatoranordnnug 12 kann einfach mit dem Batteriemanagementsystem 22 verbunden werden, insbesondere mittels eines Steckkontakts.

Die Akkumulatoranordnung 12 stellt die elektrische Leistung für einen ersten Elektromotor 24 zur Verfügung. Dabei kann ein Wechselrichter 26 zwischengeschalten sein, der die von der Akkumulatoranordnung 12 zur Verfügung gestellte Gleichspannung in eine Wechselspannung konvertiert. Der erste Elektromotor 24 treibt wiederum eine Fahrantriebs-Hydraulikpumpe 28 an, die im gezeigten Ausführungsbeispiel vier Fahrantriebshydraulikmotoren 30, 32, 34, 36 antreibt. Dabei sind die Fahrantriebs-Hydraulikmotoren 30, 32 einer ersten Achse und die Fahrantriebs-Hydraulikmotoren 34, 36 einer zweiten Achse zugeordnet. Grundsätzlich wäre es auch denkbar, jeweils einen Fahrantriebs-Hydraulikmotor für eine Achse vorzusehen. Im gezeigten Ausführungsbeispiel sind die Fahrantriebs-Hydraulikmotoren als Radmotoren ausgebildet, sodass jedem Rad 38, 40, 42, 44 ein eigener Motor zugeordnet ist.

Ein zweiter Elektromotor 46 ist ebenfalls an die Akkumulatoranordnung 12 über einen Wechselrichter angeschlossen und dafür vorgesehen, die Fahrantriebs-Hydraulikpumpe 28 anzutreiben. Eine Steuerung 48, die als Fahrantriebssteuerung ausgebildet ist, steuert dabei, welcher der Elektromotoren 24, 46 verwendet wird, um die Fahrantriebs-Hydraulikpumpe 28 anzutreiben. Die Elektromotoren 24, 46 sind somit beliebig zu- und abschaltbar. Die Fahrantriebs-Hydraulikpumpe 28 kann durch einen der Elektromotoren 24, 46 oder durch beide Elektromotoren 24, 46 angetrieben werden.

Die Steuerung 48 steht in datentechnischer Verbindung zu der Steuerung 22.

Durch die Steuerung 48 kann auch der Wechselrichter 26 gesteuert werden. Signale von den Elektromotoren 24, 46, die durch jeweils einen Sensor 50, der als Encoder ausgebildet sein kann, erfasst werden können, können der Steuerung 48 zugeführt werden, um unter Berücksichtigung der erfassten Signale den Fahrantrieb zu steuern und/oder zu regeln. Das Fahrzeug 10 weist einen weiteren Elektromotor 52 auf, der mit einer weiteren Hydraulikpumpe 54 verbunden ist und diese antreibt. Auch der weitere Elektromotor 52 wird durch die Akkumulatoranordnung 12 mit Leistung versorgt. Dies kann wie bei den ersten und zweiten Elektromotoren 24, 46 über die Steuerung 48 und einen Wechselrichter 56 erfolgen. Auch dem weiteren Elektromotor 52 kann ein Sensor 58 zugeordnet sein, über den Signale betreffend den Elektromotor 52 erfasst werden können und der Steuerung 48 zugeführt werden können.

Die weitere Hydraulikpumpe 54 ist dafür vorgesehen, eine Lenkeinheit 60 anzutreiben, wobei die Lenkeinheit 60 im gezeigten Ausführungsbeispiel mit Lenkzylindern 62, 64 in Verbindung steht. Die Lenkzylinder 62, 64 bewirken, dass Fahrzeugteile um eine Achse 66 relativ zueinander verschwenkt werden können. Bei dem Fahrzeug 10 handelt es sich demnach um ein Knickgelenkfahrzeug. Die vorliegende Erfindung ist jedoch nicht auf Knickgelenkfahrzeuge beschränkt. Es kann durchaus auch vorgesehen sein, dass das Fahrzeug 10 gelenkte Räder 42, 44 aufweist.

Die Hydraulikpumpe 54 treibt weiterhin Funktionseinheiten bzw. Komponenten 68, 70 an. Insbesondere können die Funktionseinheiten 68, 70 Steckkupplungen umfassen, an die externe Geräte angeschlossen werden können. Durch die Funktionseinheiten 68, 70 können beispielsweise die angeschlossenen externen Geräte angehoben oder abgesenkt werden. Zudem kann die Hydraulikpumpe 54 dafür verwendet werden, an die Funktionseinheiten 68, 70 angeschlossene externe Geräte zu betreiben oder anzutreiben, wie beispielsweise eine Kehrmaschine. Zu diesem Zweck kann die Hydraulikpumpe Abtriebe im Bereich der Funktionseinheiten 68, 70 antreiben.

Die Hydraulikpumpe 54 kann als Zahnradpumpe ausgebildet sein und bei unterschiedlichen Drehzahlen, insbesondere Drehzahlbereichen, betrieben werden. Für jeden Bereich kann ein eigenes Aktivierungsmittel vorgesehen sein. Ein erster Drehzahlbereich kann dabei für die Lenkeinheit 60 vorgesehen sein. Ein zweiter Drehzahlbereich kann für die Funktionseinheiten 68, 70 vorgesehen sein und ein dritter Drehzahlbereich kann für den Betrieb von an die Funktionseinheiten 68, 70 angeschlossenen externen Geräten vorgesehen sein.

Das Fahrzeug 10 weist weiterhin eine an die Steuerung 48 angeschlossene Anzeigeeinrichtung 72, einen ebenfalls an die Steuerung 48 angeschlossenen DC/DC-Wandler 74 und eine daran angeschlossene 12V Batterie 76 zur Versorgung eines Bordnetzes 78 auf.

Zur Versorgung der Hydraulikkomponenten ist ein Hydrauliktank 80 vorgesehen. Ebenso sind ein elektrischer Lüfter 82 sowie Kühler 84, 86 für die Hydraulik vorgesehen.

Die hydraulische Fahrantriebspumpe 28 kann als Konstantpumpe, insbesondere als Tandemkonstantpumpe, ausgebildet sein. Dadurch kann ein Mittendifferential realisiert werden und dadurch sichergestellt werden, dass die Räder 38, 40 der einen Achse gleich schnell drehen, wie die Räder 42, 44 der zweiten Achse.

Letztendlich sind ein mit der Steuerung 48 verbundenes, als Gaspedal ausgebildetes Steuermittel 88 sowie ein als Bremspedal ausgebildetes Steuermittel 90 mit zugeordneten Bremsen 92, 94 vorgesehen. Es versteht sich, dass an allen Rädern 38, 40, 42, 44 Bremsen vorgesehen sein können.

## Patentansprüche

1. Elektrohydraulisches Systemfahrzeug (10) mit zumindest einem ersten Elektromotor (24), der an eine Akkumulatoranordnung (12) angeschlossen ist, die eine Gleichspannung <60V, insbesondere von 48V, bereitstellt, und zumindest eine Fahrantriebs-Hydraulikpumpe (28) antreibt, die wiederum zumindest einen Fahrantriebs-Hydraulikmotor (30, 32, 34, 36) antreibt, **dadurch gekennzeichnet, dass** ein zweiter Elektromotor (46), der an die Akkumulatoranordnung (12) angeschlossen ist, vorgesehen ist und die zumindest eine Fahrantriebs-Hydraulikpumpe (28) antreibt.

2. Fahrzeug nach Anspruch 1, **dadurch gekennzeichnet, dass** eine Steuerung (48) vorgesehen ist, die nach Bedarf den ersten und zweiten Elektromotor zu- und abschaltet.

3. Fahrzeug nach einem der vorhergehenden Ansprüche 1 oder 2, **dadurch gekennzeichnet, dass** durch den ersten und den zweiten Elektromotor (24, 46) eine Dauerleistung im Bereich von jeweils 5kW und eine Spitzenleistung im Bereich von jeweils 10kW erzeugbar ist.

4. Fahrzeug nach einem der vorhergehenden Ansprüche, **dadurch gekennzeichnet, dass** die Akkumulatoranordnung (12) als Wechselakkumulatoranordnung ausgebildet ist.

5. Fahrzeug nach einem der vorhergehenden Ansprüche, **dadurch gekennzeichnet, dass** die Fahrantriebs-Hydraulikpumpe (28) als Konstantpumpe ausgebildet ist.

6. Fahrzeug nach Anspruch 5, **dadurch gekennzeichnet, dass** die Fahrantriebs-Hydraulikpumpe (28) als Tandemkonstantpumpe ausgebildet ist.

7. Fahrzeug nach einem der Ansprüche 5 oder 6, **dadurch gekennzeichnet, dass** durch die Konstantpumpe ein Mittendifferential ausgebildet ist.

8. Fahrzeug nach einem der vorhergehenden Ansprüche, **dadurch gekennzeichnet, dass** ein weiterer Elektromotor (52) zum Antrieb einer weiteren Hydraulikpumpe (54) vorgesehen ist.

9. Fahrzeug nach Anspruch 8, **dadurch gekennzeichnet, dass** die weitere Hydraulikpumpe (54) über den weiteren Elektromotor (52) in unterschiedlichen Drehzahlbereichen betreibbar ist.

10. Fahrzeug nach Anspruch 9, **dadurch gekennzeichnet, dass** jeder Drehzahlbereich separat aktivierbar ist.

11. Fahrzeug nach einem der vorhergehenden Ansprüche 8 bis 10, **dadurch gekennzeichnet, dass** die weitere Hydraulikpumpe (54) mit einer Lenkeinheit (60) und/oder zumindest einem Abtrieb verbunden ist.

12. Fahrzeug nach einem der vorhergehenden Ansprüche, **dadurch gekennzeichnet, dass** zumindest der erste und der zweite Elektromotor (24, 46) identisch aufgebaut sind.

13. Fahrzeug nach einem der vorhergehenden Ansprüche, **dadurch gekennzeichnet, dass** zumindest der erste Elektromotor (24) einen Wechselrichter und einen Umrichter aufweist.
